# EUROPEAN PATENT APPLICATION

(11) **EP 4 541 651 A1**
(43) Date of publication of application: **23.04.2025**
(21) Application number: 23874293.6
(22) Date of filing: 26.09.2023
(51) Int. Cl.: B60N 2/06, B60N 2/07, B60N 2/22, B60N 2/02, B60N 2/90

(54) **AUTOMOBILE SEAT AND AUTOMOBILE HAVING SAME**

(30) Priority: 08.10.2022 CN 202222666899 U
(71) Applicant: Nio Technology (Anhui) Co., Ltd, Hefei City, Anhui 230601 (CN)
(72) Inventor: XU, Zhiqiang, Shanghai 201804 (CN); WANG, Qiong, Shanghai 201804 (CN); HAN, Gang, Shanghai 201804 (CN); HU, Junwei, Shanghai 201804 (CN)
(74) Representative: Vossius & Partner Patentanwälte Rechtsanwälte mbB
(86) International application number: PCT/CN2023/121347
(87) International publication number: WO 2024/074101

(57) **Abstract**

A vehicle seat (1) comprises a fixed bracket (10), a cushion (20), a backrest (30), a sliding adjustment mechanism (40), and movable links (50), where the cushion is slidably fixed to the fixed bracket; the backrest is rotatably fixed to the cushion; the sliding adjustment mechanism is fixed to the cushion and is configured to drive the cushion to slide relative to the fixed bracket; and each of the movable links is pivotally connected to the fixed bracket at one end and is pivotally connected to the backrest at the other end, such that when the backrest is caused by the cushion to slide together, the backrest simultaneously rotates relative to the cushion under the action of the movable links. A vehicle includes a vehicle seat. The vehicle seat can easily realize the linkage adjustment of a cushion and a backrest, improve the comfort of the vehicle seat, and simplify the structure of the vehicle seat, reducing machining costs.

## Description

### REFERENCE TO PRIORITY APPLICATION

The present application claims priority to the Chinese Utility Model Patent No. 202222666899.3 filed on October 8, 2022, the contents of which are incorporated herein by reference in its entirety.

### Technical Field

The invention relates to the technical field of vehicles, and in particular to a vehicle seat and a vehicle having the vehicle seat.

### Technical Background

The vehicle seat is a seat for a driver or a passenger in a vehicle, can provide a comfortable and safe seat for the driver or the passenger, and is one of important parts of the vehicle.

Currently, a vehicle seat generally includes components such as a cushion, a backrest, a headrest and an armrest. In order to improve the comfort of the vehicle seat, particularly front seats of a vehicle, the position of the cushion and the angle of the backrest are adjustable. The Chinese Patent Application No. CN103661011B discloses a seat with a backrest and cushion linkage to further improve the comfort of a vehicle seat. The seat comprises a fixed seat frame, a slidable seat frame, a push-pull component, a backrest, a pitch rotating shaft, a linkage plate, a positioning device and other components. A lower end of the backrest is pivotally connected to a rear end of the push-pull component by an articulated shaft; A pitch rotating shaft is provided on the backrest such that the backrest is rotatable relative to the pitch rotating shaft and is restrained by the slidable seat frame. When the backrest is rotated about the articulated shaft, the push component is caused to slide forwards or backwards relative to the slidable seat frame. The linkage plate is pivotally connected to the push-pull component by a push-pull linkage shaft, pivotally connected to the slidable seat frame by a slide linkage shaft, and pivotally connected to the fixed seat frame by a fixed linkage shaft. The push-pull component and the slidable seat frame are respectively driven by the push-pull linkage shaft and the slide linkage shaft to synchronously move back and forth with the fixed linkage shaft as a fulcrum.

However, the seat with a backrest and cushion linkage has many components, is complex in structure and is costly to machine, and there is a potential for improvements.

Therefore, a new technical solution is needed in the art to solve the above problem.

### SUMMARY

In order to solve the technical problem of a complicated structure of a vehicle seat with a cushion and backrest linkage adjustment function in the prior art, the invention provides a vehicle seat. The vehicle seat includes: a fixed bracket; a cushion slidably fixed to the fixed bracket; a backrest rotatably fixed to the cushion; a sliding adjustment mechanism fixed to the cushion and configured to drive the cushion to slide relative to the fixed bracket; and movable links, where each of the movable links is pivotally connected to the fixed bracket at one end and is pivotally connected to the backrest at the other end, such that when the backrest is caused by the cushion to slide together, the backrest simultaneously rotates relative to the cushion under the action of the movable links.

The vehicle seat of the invention includes a fixed bracket, a cushion, a backrest, a sliding adjustment mechanism, and movable links. The cushion is slidably fixed to the fixed bracket for flexible adjustment of the position of the cushion. The backrest is rotatably fixed to the cushion for flexible adjustment of the angle of the backrest. The sliding adjustment mechanism is fixed to the cushion and is configured to drive the cushion to slide relative to the fixed bracket in order to easily drive the cushion to slide. Each of the movable link is pivotally connected to the fixed bracket at one end and is pivotally connected to the backrest at the other end. When the cushion slides on the fixed bracket under the drive of the sliding adjustment mechanism, the backrest is caused by the cushion to slide together. At the same time, the backrest rotates relative to the cushion under the action of the movable links. With the above configuration, the vehicle seat of the invention can smoothly realize the linkage adjustment of the cushion and the backrest, and the vehicle seat has a simple structure, and is easy to machine, thus significantly reducing machining costs and reducing product weight.

In a preferred technical solution of the vehicle seat as described above, the cushion includes: a cushion mounting bracket slidably fixed to the fixed bracket and connected to the backrest; a cushion body slidably fixed to the cushion mounting bracket; and an angle adjustment mechanism connected to each of the cushion mounting bracket and the cushion body and configured to drive the cushion body to rotate relative to the cushion mounting bracket. With the above configuration, the cushion body can be easily rotated relative to the cushion mounting bracket under the control of the angle adjustment mechanism, thereby further improving the comfort of the vehicle seat of the invention.

In a preferred technical solution of the vehicle seat as described above, the cushion mounting bracket includes a first horizontal plate and a second horizontal plate that are opposite each other, and the angle adjustment mechanism includes: a first drive device fixed to the first horizontal plate; a first gear fixed to an output shaft of the first drive device; a first toothed plate having a first toothed portion formed on one end of the first toothed plate to mesh with the first gear; and a first link assembly connected to each of an end of the first toothed plate away from the first toothed portion, the cushion body and the second horizontal plate. The first gear, the first toothed plate and the first link assembly cooperate with each other under the drive of the first drive device such that the cushion body can be easily adjusted angularly.

In a preferred technical solution of the vehicle seat as described above, the fixed bracket includes two slide rails which are parallel to each other; the cushion includes two sliding rods corresponding to the two slide rails; and the sliding adjustment mechanism is fixed between the two sliding rods and is configured to drive the sliding rods to slide relative to the slide rails. Under the drive of the sliding adjustment mechanism, the sliding rods fit with the slide rails such that the cushion can easily slide.

In a preferred technical solution of the vehicle seat as described above, the sliding adjustment mechanism includes: a support bracket with two ends each fixed to one of the two sliding rods; a motor fixed to the support bracket and having two rotating shafts that extend in opposite directions and that are coaxial with each other; and two gearboxes, each of the two gearboxes being fixed to one of the two slide rails, and each of the gearboxes being connected to a corresponding one of the rotating shafts of the motor. With the above configuration, the sliding adjustment mechanism has a simple and stable structure and is easily machined.

In a preferred technical solution of the vehicle seat as described above, the backrest includes: a backrest bracket, a lower portion of the backrest bracket being fixedly connected to the cushion; a shoulder bracket rotatably fixed at an upper portion of the backrest bracket; and a shoulder adjustment mechanism connected to each of the backrest bracket and the shoulder bracket and configured to drive the shoulder bracket to rotate relative to the backrest bracket. With the above configuration, the angle of the shoulder bracket can be adjusted flexibly, thereby further improving the comfort.

In a preferred technical solution of the vehicle seat as described above, the backrest bracket includes a first vertical plate and a second vertical plate opposite each other, and the shoulder adjustment mechanism includes: a second drive device fixed to the first vertical plate; a second gear fixed to an output shaft of the second drive device; a second toothed plate having a second toothed portion formed on a first end of the second toothed plate to mesh with the second gear; and a second link assembly connected to each of a second end of the second toothed plate away from the second toothed portion, the shoulder bracket and the second vertical plate. With the above configuration, the second gear, the second toothed plate and the second link assembly cooperate with each other under the drive of the second drive device such that the shoulder bracket can be easily adjusted angularly.

In a preferred technical solution of the vehicle seat as described above, the shoulder bracket includes a third vertical plate connected to the first vertical plate and a fourth vertical plate connected to the second vertical plate, and the second link assembly includes: a second link with two ends pivotally connected to the second end and the third vertical plate, respectively; a third transmission rod rotatably fixed between the first vertical plate and the second vertical plate, the third transmission rod extending through the second toothed plate and being fixedly connected to the second toothed plate; a transmission plate fixed to the third transmission rod and positioned adjacent to the second vertical plate; and a transmission link with two ends pivotally connected to an end of the transmission plate away from the third transmission rod and the fourth vertical plate, respectively. With the above configuration, the second link can be controlled to rotate the third vertical plate under the drive of the second drive device. At the same time, the third transmission rod, the transmission plate and the transmission link cooperate with each other to simultaneously rotate the fourth vertical plate, thereby ensuring the stability of rotation of the shoulder bracket.

In a preferred technical solution of the vehicle seat as described above, the vehicle seat further includes a leg rest fixed to the cushion. The provision of the leg rest can further improve the comfort of the vehicle seat.

In order to solve the technical problem of a complicated structure of a vehicle seat with a cushion and backrest linkage adjustment function in the prior art, the invention provides a vehicle. The vehicle includes a vehicle seat according to any one of the above technical solutions. By employing the vehicle seat as described in any one of the above technical solutions, the vehicle of the invention can easily realize the linkage adjustment of the cushion and the backrest, improve the comfort of the vehicle seat, and simplify the structure of the vehicle seat, facilitate machining and manufacturing, reducing machining costs and reducing product weight.

### Brief Description of the Drawings

Preferred implementations of the invention are described below with reference to the accompanying drawings, in which:
FIG. 1 is a schematic front view of the structure of an embodiment of a vehicle seat according to the invention;
FIG. 2 is a schematic back view of the structure of an embodiment of a vehicle seat according to the invention;
FIG. 3 is a schematic bottom view of the structure of an embodiment of a vehicle seat according to the invention;
FIG. 4 is a schematic view of the structure of an embodiment of a vehicle seat according to the invention, with cushion and a backrest that are linkage adjusted;
FIG. 5 is a schematic diagram of the structure of an embodiment of a sliding adjustment mechanism of a vehicle seat according to the invention;
FIG. 6 is a schematic diagram of the structure of an angle adjustment mechanism of a vehicle seat the according to the invention;
FIG. 7 is a schematic diagram of the structure of an embodiment of a shoulder adjustment mechanism of a vehicle seat according to the invention.

### List of reference signs:

1. Vehicle seat; 10. Fixed bracket; 11. Front bracket; 12. Rear bracket; 13 Slide rail; 20. Cushion; 21. Cushion mounting bracket; 211a. First horizontal plate; 211b. Second horizontal plate; 2111. Fixed shaft; 212. Sliding rod; 213. Connecting bracket; 22. Cushion body; 221. Base plate; 2211. Fixed bearing; 222. Circumferential wall; 23. Angle adjustment mechanism; 231. First drive device; 232. First gear; 233. First toothed plate; 2331. First toothed portion; 234. First link assembly; 2341. First driving link; 2342. First driven link; 2343. First transmission rod; 2344. Second transmission rod; 2345. Support rod; 30. Backrest; 31. Backrest bracket; 311. First vertical plate; 312. Second vertical plate; 313. First connecting plate; 32. Shoulder bracket; 321. Third vertical plate; 322. Third vertical plate; 323. Second connecting plate; 33. Shoulder adjustment mechanism; 331. Second drive device; 332. Second gear; 333. Second toothed plate; 3331. First end; 33311. Second toothed portion; 3332. Second end; 334. Second link assembly; 3341. Second link; 3342. Third transmission rod; 3343. Transmission plate; 3344. Transmission link; 40. Sliding adjustment mechanism; 41. Support bracket; 42. Motor; 421. Rotating shaft; 43. Gearbox; 50. Movable link; 51. Movable link body; 52. First movable link end; 53. Second movable link end; 60. Leg rest; 61. Leg rest body; 62. Third drive device; 63. Screw rod.

### Detailed Description of Embodiments

The preferred implementations of the invention are described below with reference to the accompanying drawings. It should be understood by those skilled in the art that these implementations are only for explaining the technical principles of the invention and are not intended to limit the scope of protection of the invention.

It should be noted that, in the description of the invention, the terms that indicate the direction or positional relationship, such as "upper", "lower", "left", "right", "inner", and "outer", are based on the direction or positional relationship shown in the figures, which is merely for ease of description instead of indicating or implying that the device or element must have a particular orientation and be constructed and operated in a particular orientation, and therefore should not be construed as limiting the invention. In addition, the terms "first" and "second" are used for descriptive purposes only, and cannot be construed as indicating or implying relative importance.

In addition, it should also be noted that, in the description of the invention, the terms "mount", "dispose" and "connect" should be interpreted in a broad sense unless explicitly defined and limited otherwise. For example, a connection may be a fixed connection, a detachable connection, or an integral connection; and may be a direct connection, an indirect connection by means of an intermediary, or internal communication between two elements. For those skilled in the art, the specific meaning of the above-mentioned terms in the invention can be interpreted according to the specific situation.

In order to solve the technical problem of a complicated structure of a vehicle seat with a cushion and backrest linkage adjustment function in the prior art, the invention provides a vehicle seat 1. The vehicle seat 1 includes: a fixed bracket 10; a cushion 20 slidably fixed to the fixed bracket 10; a backrest 30 rotatably fixed to the cushion 20; a sliding adjustment mechanism 40 fixed to the cushion 20 and configured to drive the cushion 20 to slide relative to the fixed bracket 10; and movable links 50, where each of the movable links 50 is pivotally connected to the fixed bracket 10 at one end and is pivotally connected to the backrest 30 at the other end, such that when the backrest 30 is caused by the cushion 20 to slide together, the backrest 30 simultaneously rotates relative to the cushion 20 under the action of the movable links 50.

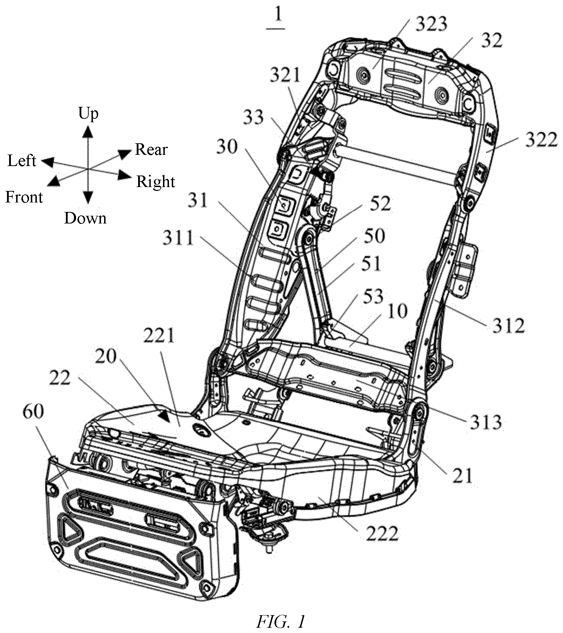

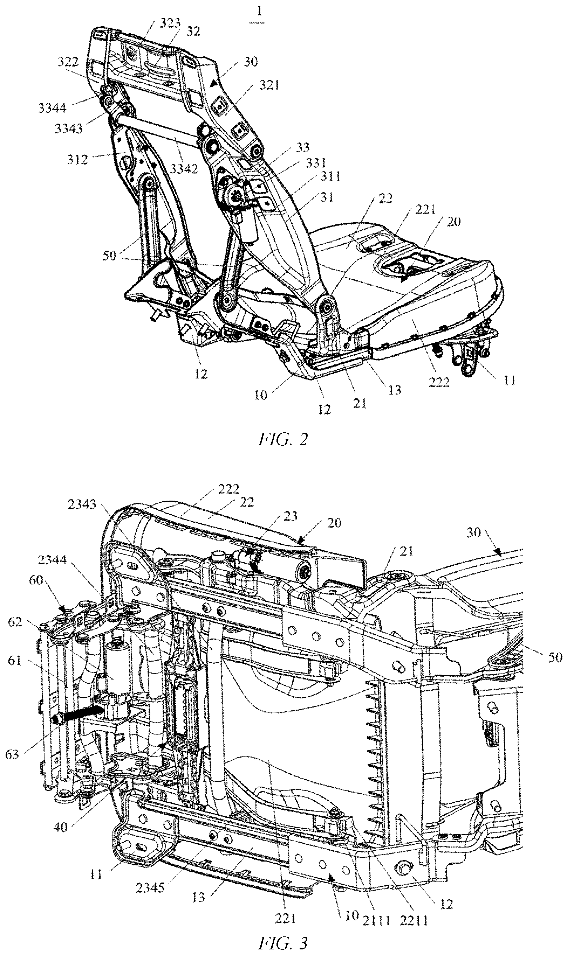

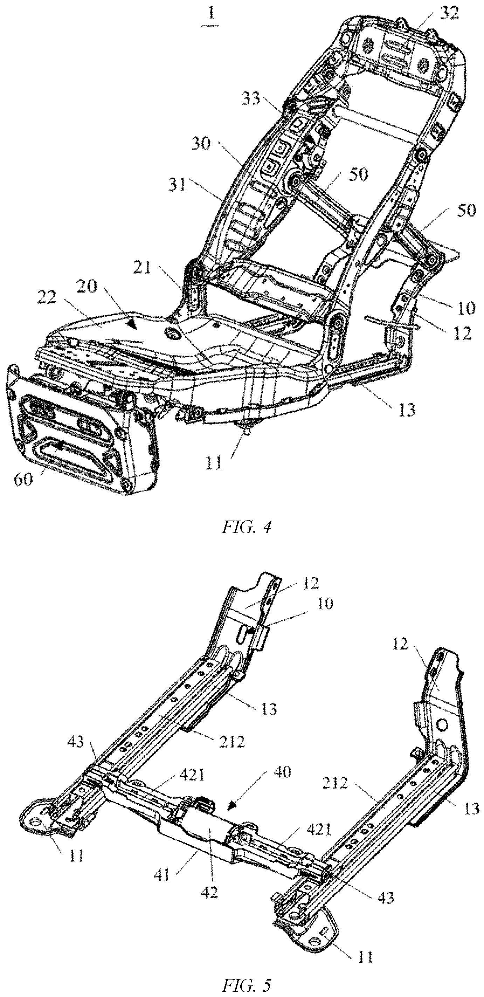

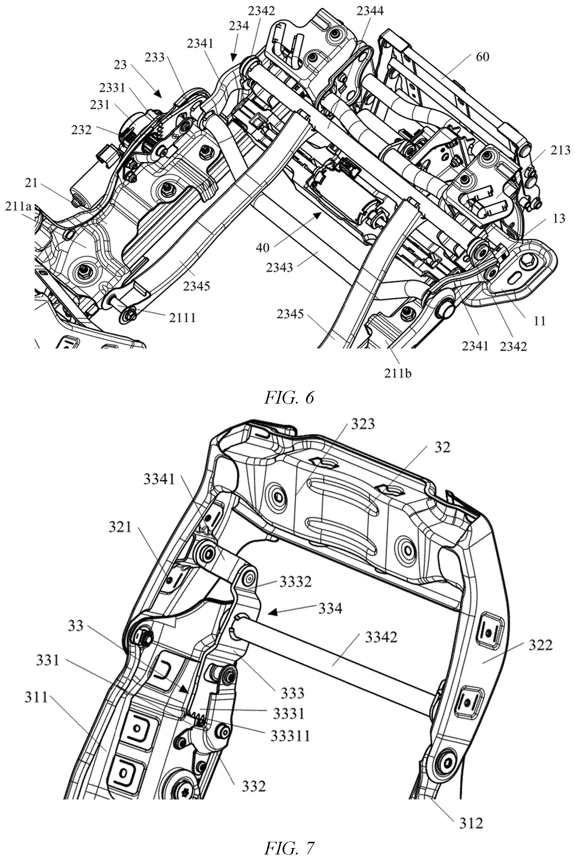

FIG. 1 is a schematic front view of the structure of an embodiment of a vehicle seat according to the invention; FIG. 2 is a schematic back view of the structure of an embodiment of a vehicle seat according to the invention; FIG. 3 is a schematic bottom view of the structure of an embodiment of a vehicle seat according to the invention; FIG. 4 is a schematic view of the structure of an embodiment of a vehicle seat according to the invention, with cushion and a backrest that are linkage adjusted; FIG. 5 is a schematic diagram of the structure of an embodiment of a sliding adjustment mechanism of a vehicle seat according to the invention; FIG. 6 is a schematic diagram of the structure of an angle adjustment mechanism of a vehicle seat the according to the invention; FIG. 7 is a schematic diagram of the structure of an embodiment of a shoulder adjustment mechanism of a vehicle seat according to the invention.

As shown in FIGS. 1-7, in one or more embodiments, a vehicle seat 1 of the invention includes a fixed bracket 10, a cushion 20, a backrest 30, a sliding adjustment mechanism 40, movable links 50, and other components. The cushion 20 is slidably fixed to the fixed bracket 10. The backrest 30 is rotatably fixed to the cushion 20. The sliding adjustment mechanism 40 is used to drive the cushion 20 to slide. Each of the movable links 50 is connected to the fixed bracket 10 and the backrest 30, such that when the cushion 20 slides relative to the fixed bracket 10, the backrest 30 is not only caused by the cushion 20 to slide together, but also rotates synchronously under the action of the movable links 50. Alternatively, the vehicle seat 1 includes a leg rest 60. Referring to FIG. 3, the leg rest 60 includes a leg rest body 61 fixed to the cushion 20. The leg rest body 61 is extended and retracted by the cooperation of the third drive device 62 and the screw rod 63, thereby enhancing the leg support for a user. The third drive device 62 may be, but is not limited to, a stepping motor, a servo motor, or the like. Alternatively, the vehicle seat 1 may further include, but is not limited to, an armrest (not shown) or another suitable component to further improve the comfort of the vehicle seat 1 of the invention.

As shown in FIG. 5, in one or more embodiments, the fixed bracket 10 includes two front brackets 11, two rear brackets 12, and two slide rails 13. Based on the orientation as shown in FIG. 5, the two front brackets 11 are spaced apart from each other in a left-right direction, and the two rear brackets 12 are also spaced apart from each other in the left-right direction. The two ends of each slide rail 13 are fixed to a corresponding front bracket 11 and a corresponding rear bracket 12, such that the two slide rails 13 are arranged in parallel to each other. A fixing method includes, but is not limited to, screwed connection. Each of the front bracket 11, the rear bracket 12 and the slide rail 13 may be machined from a suitable metal material (such as stainless steel), to impart them a good mechanical strength. In addition, a suitable number of fixing holes (not labeled in the figure) are provided in the front brackets 11 and the rear brackets 12, in order to easily fix the entire fixed bracket 10 to a vehicle body (not shown) of a vehicle by suitable fasteners (such as bolts, nuts, etc.).

As shown in FIGS. 1-6, in one or more embodiments, the cushion 20 includes a cushion mounting bracket 21, a cushion body 22, and an angle adjustment mechanism 23. The cushion body 22 is slidably fixed to the cushion mounting bracket 21. The angle adjustment mechanism 23 is connected to each of the cushion body 22 and the cushion mounting bracket 21 to drive the cushion body 22 to rotate relative to the cushion mounting bracket 21, which in turn improves the comfort of the vehicle seat 1. It is noted that in one or more alternative embodiment, it is also possible to provide no angle adjustment mechanism 23 in the cushion 20.

With continued reference to FIG. 6, in one or more embodiments, the cushion mounting bracket 21 includes a first horizontal plate 211a and a second horizontal plate 211b that are spaced from each other in the left-right direction. Each of the first horizontal plate 211a and the second horizontal plate 211b may be machined from a suitable metal material (such as stainless steel), to impart them a good mechanical strength. The first horizontal plate 211a and the second horizontal plate 211b are pivotally connected to a second vertical plate 312 and a first vertical plate 311 of the backrest 30, respectively, such that the backrest 30 is rotatably fixed to the cushion 20. Fixed shafts 2111 opposite and coaxial with each other are further provided on the first horizontal plate 211a and the second horizontal plate 211b so as to fit with corresponding fixed bearings 2211 on the cushion body 22, such that the cushion body 22 is rotatably fixed to the cushion mounting bracket 21. In addition, a sliding rod 212 is provided on each of the first horizontal plate 211a and the second horizontal plate 211b. The sliding rods 212 are slidably fixed in the slide rails 13 of the fixed bracket 10, such that the cushion 20 is slidably fixed to the fixed bracket 10.

With continued reference to FIG. 6, in one or more embodiments, the cushion mounting bracket 21 further includes two connecting brackets 213 that are spaced from each other in the left-right direction. Each of the connecting brackets 213 is connected to a corresponding first horizontal plate 211a or a corresponding second horizontal plate 211b by a first link assembly 234 of the angle adjustment mechanism 23. In one or more embodiment, a locking mechanism (not labeled in the figure) is further provided on the connecting brackets 213 so as to form a detachable fixed connection with the front of the cushion body 22. The connecting brackets 213 also provide a suitable mounting area for the leg rest 60 such that the leg rest 60 is fixedly connected to the cushion body 22.

With continued reference to FIGS. 1-4, in one or more embodiments, the cushion body 22 includes a generally rectangular base plate 221 and a circumferential wall 222 extending vertically downwardly from a circumferential edge of the base plate 221. The base plate 221 and the circumferential wall 222 can be integrally formed of a suitable metal material (such as stainless steel) to simplify a machining process. The provision of the circumferential wall 222 not only enhances the rigidity and strength of the base plate 221, but also can effectively protect and shield the components at the bottom of the base plate 221. Two fixed bearings 2211 that are spaced from each other in the left-right direction are provided at a rear portion of the base plate 221. The fixed bearings 2211 are positioned at the bottom of the base plate 221 and allow corresponding fixed shafts 2111 on the cushion mounting bracket 21 to pass therethrough. In one or more embodiment, the fixed bearings 2211 are U-shaped grooves that open rearward, so as to allow the fixed shafts 2111 to be easily inserted into the fixed bearings 2211 to improve the assembly efficiency. A front portion of the base plate 221 is detachably fixed to the connecting brackets 213 of the cushion mounting bracket 21. A fixing method includes, but is not limited to, screwed connection, engaging, etc.

With continued reference to FIG. 6, in one or more embodiments, the angle adjustment mechanism 23 includes a first drive device 231, a first gear 232, a first toothed plate 233, a first link assembly 234, and other components. In one or more embodiment, the first drive device 231 is fixed to the first horizontal plate 211a. Alternatively, the first drive device 231 may also be fixed to the second horizontal plate 211b. The first drive device 231 may be, but is not limited to, a stepping motor, a servo motor, or the like. The first gear 232 is fixed to an output shaft of the first drive device 231. The first toothed plate 233 is of a generally rectangular plate-like structure. A first toothed portion 2331 which meshes with the first gear 232 is formed at one end of the first toothed plate 233. The first toothed plate 233 is connected to the first link assembly 234 at the other end. The first link assembly 234 is also connected to each of the cushion body 22 and the second horizontal plate 211b, in order to rotate the cushion body 22 relative to the cushion mounting bracket 21 under the action of the first link assembly 234.

With continued reference to FIG. 6, in one or more embodiments, the first link assembly 234 includes two first driving links 2341, two first driven links 2342, one first transmission rod 2343, and one second transmission rod 2344. The first transmission rod 2343 extends generally in the left-right direction. The first transmission rod 2343 is rotatably fixed between the first horizontal plate 211a and the second horizontal plate 211b and positioned at an end away from the backrest 30. The second transmission rod 2344 extends generally in the left and right direction, and is fixed at its two ends to corresponding connecting brackets 213. The first transmission rod 2343 extends through the first toothed plate 233 and is fixedly connected to the first toothed plate. Therefore, when the first toothed plate 233 is caused by the first drive device 231 to rotate, the first transmission rod 2343 also rotates synchronously. The two first driving links 2341 are fixed at the left and right ends of the first transmission rod 2343. A fixing method includes, but is not limited to, welding. Each of the first driven links 2342 is pivotally connected to a corresponding first drive link 2341 at one end, and the other end of each of the first driven links 2342 is connected to one of the two ends of the second transmission rod 2344. Therefore, when the first transmission rod 2343 rotates, the first driving links 2341 rotate synchronously and cause the first driven links 2342 to act on the front of the cushion body 22, so as to control the rotation of the cushion body 22 about an axis of rotation of the fixed shaft 2111 of the cushion mounting bracket 21 (that is, the cushion body 22 rotates relative to the cushion mounting bracket 21), achieving the angular adjustment of the cushion body 22.

With continued reference to FIG. 6, in one or more embodiments, the first link bracket 234 further includes two support rods 2345. Each of the support rods 2345 extends generally in a front-rear direction. One end of the support rod 2345 is rotatably fixed to a corresponding fixed shaft 2111, and the other end of the support rod 2345 is connected to the second transmission rod 2344. With the above configuration, when the cushion body 22 rotates about the axis of rotation of the fixed shaft 2111, the two support rods 2345 can act as auxiliary support, thereby allowing the cushion body 22 to rotate more stably.

As shown in FIGS. 1 and 7, in one or more embodiments, the backrest 30 includes a backrest bracket 31, a shoulder bracket 32, and a shoulder adjustment mechanism 33. The backrest bracket 31 is slidably fixed to the cushion mounting bracket 21. The shoulder bracket 32 is rotatably fixed to the backrest bracket 31. The shoulder adjustment mechanism 33 is used to drive the shoulder bracket 32 to rotate relative to the backrest bracket 31. With the above configuration, the shoulder bracket 32 can be flexibly adjusted with respect to angle to further improve the comfort of the vehicle seat 1.

With continued reference to FIG. 1, in one or more embodiments, the backrest bracket 31 includes a first vertical plate 311, a second vertical plate 312, and a first connecting plate 313. The first vertical plate 311, the second vertical plate 312 and the first connecting plate 313 may be machined from a suitable metal material (such as stainless steel, etc.), to impart them a good mechanical strength. The first vertical plate 311 and the second vertical plate 312 are spaced from each other in the left-right direction. The first connecting plate 313 is arranged between the first vertical plate 311 and the second vertical plate 312 and is positioned at lower portions of the first vertical plate 311 and the second vertical plate 312. Alternatively, it is also possible to provide no first connecting plate 313 or a plurality of first connecting plates 313 spaced from each other between the first vertical plate 311 and the second vertical plate 312 according to actual requirements. The lower portion of the first vertical plate 311 is pivotally connected to the second horizontal plate 211b of the cushion mounting bracket 21, and the lower portion of the second vertical plate 312 is pivotally connected to the first horizontal plate 211a of the cushion mounting bracket 21, such that the entire backrest 30 is rotatably fixed to the cushion 20.

With continued reference to FIG. 1, in one or more embodiments, the shoulder bracket 32 includes a third vertical plate 321, a fourth vertical plate 322, and a second connecting plate 323. The third vertical plate 321, the fourth vertical plate 322 and the second connecting plate 323 may be machined from a suitable metal material (such as stainless steel, etc.), to impart them a good mechanical strength. The third vertical plate 321 and the fourth vertical plate 322 are spaced from each other in the left-right direction. The third vertical plate 321 is opposite the first vertical plate 311, and a lower portion of the third vertical plate 321 is pivotally connected to an upper portion of the first vertical plate 311. Correspondingly, the fourth vertical plate 322 is opposite the second vertical plate 312, and a lower portion of the fourth vertical plate 322 is pivotally connected to an upper portion of the second vertical plate 312. A second connecting plate 323 is arranged between the third vertical plate 321 and the fourth vertical plate 322, and is positioned at upper portions of the third vertical plate 321 and the fourth vertical plate 322.

With continued reference to FIG. 7, in one or more embodiments, the shoulder adjustment mechanism includes a second drive device 331, a second gear 332, a second toothed plate 333, and a second link assembly 334. In one or more embodiment, the second drive device 331 is fixed to the first vertical plate 311. Alternatively, the second drive device 331 may also be fixed to the second vertical plate 312. The second drive device 331 may be, but is not limited to, a servo motor, a stepping motor, or the like. The second gear 332 is fixed to an output shaft of the second drive device 331. The second toothed plate 333 is of a generally rectangular plate-like structure. The plate-like structure has a first end 3331 and a second end 3332 that are apposite each other. Based on the orientation as shown in FIG. 7, the first end 3331 is a lower end, and the second end 3332 is an upper end. A second toothed portion 33311 meshing with the second gear 332 is provided at the first end 3331. The second end 3332 is connected to the second link assembly 334. The second link assembly 334 is also connected to each of the shoulder bracket 32 and the second vertical plate 312, in order to rotate the shoulder bracket 32 relative to the backrest bracket 31 under the action of the second link assembly 334.

With continued reference to FIG. 7, in one or more embodiments, the second link assembly 334 includes a second link 3341, a third transmission rod 3342, a transmission plate 3343, a transmission link 3344, and other components. The third transmission rod 3342 extends generally in the left-right direction. The third transmission rod 3342 is rotatably fixed between the first vertical plate 311 and the second vertical plate 312, and is positioned at the upper portions of the first vertical plate 311 and the second vertical plate 312. The third transmission rod 3342 extends through the second toothed plate 333 and is fixedly connected to the second toothed plate 333. A fixing method includes, but is not limited to, welding. Therefore, when the second toothed plate 333 is caused by the second drive device 331 to rotate, the third transmission rod 3342 also rotates synchronously. One end of the second link 3341 is pivotally connected to the second end 3332 of the second toothed plate 333, and the other end of the second link 3341 is pivotally connected to the third vertical plate 321. Referring to FIG. 2, the transmission plate 3343 is fixed to the third transmission rod 3342 and positioned adjacent to the second vertical plate 312 (i.e., remote from the second toothed plate 333). A fixing method includes, but is not limited to, welding. One end of the transmission link 3344 is pivotally connected to an end of the transmission plate 3343 away from the third transmission rod 3342, and the other end of the transmission link 3344 is pivotally connected to the fourth vertical plate 322. With the above configuration, when the third transmission rod 3342 is caused by the second drive device 331 to rotate synchronously, the shoulder bracket 32 will rotate relative to the backrest bracket 31 under the action of the links, thereby achieving the angular adjustment of the shoulder bracket 32.

As shown in FIG. 5, in one or more embodiments, the sliding adjustment mechanism 40 includes a support bracket 41, a motor 42, two gearboxes 43. The support bracket 41 extends generally in the left-right direction. The two ends of the support bracket 41 are fixed to the two sliding rods 212, respectively. The motor 42 is a double-shaft motor. The double-shaft motor can be a servo motor, stepping motor or another suitable motor. The motor 42 has two rotating shafts 421 that extend in opposite directions and that are coaxial with each other. Each rotating shaft 421 cooperates with a corresponding gearbox 43. Each of the two gearboxes 43 is arranged on one of the two sliding rods 212, such that the sliding rods 212 slide smoothly relative to the slide rails 13 under the drive of the motor 42. Alternatively, the sliding adjustment mechanism 40 may also be configured in another suitable structure so long as the cushion 20 can be driven to slide relative to the fixed bracket 10.

As shown in FIGS. 1 and 2, the number of movable links 50 is 2. Each of the movable links 50 has a generally rectangular movable link body 51. The movable link body 51 may be machined from a suitable metal material (such as stainless steel, etc.), to impart the movable link body a good mechanical strength. The movable link body 51 has a first movable link end 52 and a second movable link end 53 that are opposite each other. Based on the orientation as shown in FIG. 1, the first movable link end 52 is an upper end, and the second movable link end 53 is a lower end. The two movable links 50 are spaced from each other in the left-right direction. The first movable link end 52 of one of the movable links 50 is pivotally connected to the first vertical plate 311, and the second movable link end 53 of the movable link 50 is pivotally connected to the rear bracket 12 adjacent thereto. Correspondingly, the first movable link end 52 of the other movable link 50 is pivotally connected to the second vertical plate 312, and the second movable link end 53 of the movable link 50 is pivotally connected to the rear bracket 12 adjacent thereto. With the above configuration, when the backrest 30 is caused by the cushion 20 to slide together, the backrest 30 rotates simultaneously relative to the cushion 20 under the action of the movable links 50, thereby achieving the linkage adjustment of the cushion 20 and the backrest 30.

In one or more embodiments, the invention further provides a vehicle (not shown). The vehicle includes a vehicle seat 1 according to any one of the above embodiments. The vehicle includes, but is not limited to, wheels, a steering wheel, a power system and other components. The vehicle may be fuel vehicle, an electric vehicle, a hybrid vehicle, or the like. The vehicle may be a car, an SUV, an MPV or another suitable vehicle.

Heretofore, the technical solutions of the invention have been described in conjunction with the preferred implementations shown in the drawings, however, those skilled in the art can readily understand that the scope of protection of the invention is obviously not limited to these specific implementations. Those skilled in the art could make equivalent changes or substitutions to the related technical features without departing from the principles of the invention, and all the technical solutions after the changes or the substitutions fall within the scope of protection of the invention.

## Claims

1. A vehicle seat, comprising:
a fixed bracket;
a cushion slidably fixed to the fixed bracket;
a backrest rotatably fixed to the cushion;
a sliding adjustment mechanism fixed to the cushion and configured to drive the cushion to slide relative to the fixed bracket; and
movable links, wherein each of the movable links is pivotally connected to the fixed bracket at one end and is pivotally connected to the backrest at the other end, such that when the backrest is caused by the cushion to slide together, the backrest simultaneously rotates relative to the cushion under the action of the movable links.

2. The vehicle seat according to claim 1, wherein the cushion comprises:
a cushion mounting bracket slidably fixed to the fixed bracket and connected to the backrest;
a cushion body slidably fixed to the cushion mounting bracket; and
an angle adjustment mechanism connected to each of the cushion mounting bracket and the cushion body and configured to drive the cushion body to rotate relative to the cushion mounting bracket.

3. The vehicle seat according to claim 2, wherein the cushion mounting bracket includes a first horizontal plate and a second horizontal plate opposite each other, and the angle adjustment mechanism includes:
a first drive device fixed to the first horizontal plate;
a first gear fixed to an output shaft of the first drive device;
a first toothed plate having a first toothed portion formed on one end of the first toothed plate to mesh with the first gear; and
a first link assembly connected to each of an end of the first toothed plate away from the first toothed portion, the cushion body and the second horizontal plate.

4. The vehicle seat according to claim 1, wherein
the fixed bracket comprises two slide rails which are parallel to each other;
the cushion comprises two sliding rods corresponding to the two slide rails; and
the sliding adjustment mechanism is fixed between the two sliding rods and is configured to drive the sliding rods to slide relative to the slide rails.

5. The vehicle seat according to claim 4, wherein the sliding adjustment mechanism comprises:
a support bracket with two ends each fixed to one of the two sliding rods;
a motor fixed to the support bracket and having two rotating shafts that extend in opposite directions and that are coaxial with each other; and
two gearboxes, each of the two gearboxes being fixed to one of the two slide rails, and each of the gearboxes being connected to a corresponding one of the rotating shafts of the motor.

6. The vehicle seat according to claim 1, wherein the backrest comprises:
a backrest bracket, a lower portion of the backrest bracket being fixedly connected to the cushion;
a shoulder bracket rotatably fixed at an upper portion of the backrest bracket; and
a shoulder adjustment mechanism connected to each of the backrest bracket and the shoulder bracket and configured to drive the shoulder bracket to rotate relative to the backrest bracket.

7. The vehicle seat according to claim 6, wherein the backrest bracket comprises a first vertical plate and a second vertical plate opposite each other, and the shoulder adjustment mechanism comprises:
a second drive device fixed to the first vertical plate;
a second gear fixed to an output shaft of the second drive device;
a second toothed plate having a second toothed portion formed on a first end of the second toothed plate to mesh with the second gear; and
a second link assembly connected to each of a second end of the second toothed plate away from the second toothed portion, the shoulder bracket and the second vertical plate.

8. The vehicle seat according to claim 7, wherein the shoulder bracket comprises a third vertical plate connected to the first vertical plate and a fourth vertical plate connected to the second vertical plate, and the second link assembly comprises:
a second link with two ends pivotally connected to the second end and the third vertical plate, respectively;
a third transmission rod rotatably fixed between the first vertical plate and the second vertical plate, the third transmission rod extending through the second toothed plate and being fixedly connected to the second toothed plate;
a transmission plate fixed to the third transmission rod and positioned adjacent to the second vertical plate; and
a transmission link with two ends pivotally connected to an end of the transmission plate away from the third transmission rod and the fourth vertical plate, respectively.

9. The vehicle seat according to claim 1, wherein further comprising a leg rest fixed to the cushion.

10. A vehicle, comprising a vehicle seat according to any one of claims 1 to 9.
